# EUROPEAN PATENT APPLICATION

(11) **EP 4 808 109 A1**
(43) Date of publication of application: **16.09.2026**
(21) Application number: 24902140.3
(22) Date of filing: 06.08.2024
(51) Int. Cl.: H04N 7/14

(54) **CALL METHOD AND RELATED APPARATUS**

(30) Priority: 11.12.2023 CN 202311699160
(71) Applicant: Huawei Technologies Co., Ltd., Shenzhen, Guangdong 518129 (CN)
(72) Inventor: WANG, Kun, Shenzhen, Guangdong 518129 (CN)
(74) Representative: Gill Jennings & Every LLP
(86) International application number: PCT/CN2024/110136
(87) International publication number: WO 2025/123714

(57) **Abstract**

This application provides a call method and a related apparatus. The method includes: A first network device receives, in a process of a first video call, a first request message sent by an agent device, where the first video call is a video call that is between a first device and the agent device and that is established by the first network device and a second network device; and the first network device sends a link message to a second device based on the first request message, where the link message is used for requesting the second device to join the video call between the first device and the agent device. According to this application, a device that does not support a video call of mobile communication can join an established video call, to implement a multi-party video call process. In this way, application scenarios of a video call function of mobile communication are wider, and user experience is improved.

## Description

This application claims priority to Chinese Patent Application No. 202311699160.5, filed with the China National Intellectual Property Administration on December 11, 2023 and entitled "CALL METHOD AND RELATED APPARATUS", which is incorporated herein by reference in its entirety.

### TECHNICAL FIELD

This application relates to the field of computer technologies, and in particular, to a call method and a related apparatus.

### BACKGROUND

With development of voice over long term evolution (Voice over Long Term Evolution, VoLTE), mobile network bandwidth may support video calls. For example, a call manner between users is upgraded from voice calls based on a 2nd generation (2nd generation, 2G) mobile communication technology/3rd generation (3rd generation, 3G) mobile communication technology to VoLTE video calls (which may be referred to as video calls for short) based on a 4th generation (4th generation, 4G) mobile communication technology. In a call center application scenario, a third-party user needs to join a current call. For example, a terminal A and a terminal B are in a video call, and in this case, a device (for example, a terminal C) of the third-party user needs to be invited to join the video call. However, if the terminal C does not support a video call function, for example, the terminal C is limited by a device standard of a vendor or mobile network bandwidth (for example, 2G or 3G) of the terminal C does not support the video call function, a video call among the terminal A, the terminal B, and the terminal C cannot be established, limiting video call scenarios of mobile communication and affecting user experience.

### SUMMARY

This application discloses a call method and a related apparatus, so that a device that does not support a video call of mobile communication can join an established video call, to implement a multi-party video call process. In this way, application scenarios of a video call function of mobile communication are wider, and user experience is improved.

According to a first aspect, an embodiment of this application provides a call method, applied to a first network device. The method includes: receiving, in a process of a first video call, a first request message sent by an agent device, where the first video call is a video call that is between a first device and the agent device and that is established by the first network device and a second network device; and sending a link message to a second device based on the first request message, where the link message is used for requesting the second device to join the video call between the first device and the agent device.

In the foregoing method, during the video call between the first device and the agent device, the link message may be sent to the second device via only the first network device, to invite the second device to join the currently established video call, without a need of communication with the second network device. In addition, the agent device may receive an incoming call request of the second device in a process of processing the current first device, to implement a multi-party video call, thereby improving user experience. In addition, in this manner, a multi-party video call can be implemented without a need of registering and storing information about the second device in the second network device in advance, and without a need of installing a third-party application.

In a possible implementation, after the sending the link message to the second device, the method further includes: receiving a second request message sent by the second device; and establishing a second video call based on the second request message, where the second video call is used for a video call among the first device, the agent device, and the second device.

In the foregoing method, during the video call between the first device and the agent device, the first network device may receive the incoming call request of the second device, and establish a new video call, to implement the multi-party video call, thereby improving user experience.

In a possible implementation, the first device supports a video call function of mobile communication, the second device does not support the video call function of mobile communication, and the second network device is a network device for mobile communication.

In the foregoing method, the second device that does not support the video call function can also join, without communicating with the second network device, the established video call by using the link message sent by the first network device, to implement a multi-party video call process. In this way, application scenarios of the video call function of mobile communication are wider, and user experience is improved.

In a possible implementation, the method further includes: determining, based on the second request message, whether the second device can join the video call between the first device and the agent device; and sending a first message to the second device when determining that the second device can join the video call between the first device and the agent device, where the first message includes first verification information and an identifier of the agent device.

In the foregoing method, the first network device may determine, based on the second request message sent by the second device, whether the second device can join the current video call between the first device and the agent device. This avoids a case in which another user equipment joins the video call by mistake or the agent device does not support joining of the second device, improves security and confidentiality of the video call, and further improves user experience.

In a possible implementation, the second request message is sent by the second device based on the link message, the second request message includes second verification information and the identifier of the agent device, the second verification information is generated by the first network device based on the first request message, and the second verification information is associated with the identifier of the agent device. The determining, based on the second request message, whether the second device can join the video call between the first device and the agent device includes: verifying, based on the second verification information in the second request message, whether an identity of the second device is valid, and determining, based on the identifier of the agent device in the second request message, whether the agent device meets a first preset condition. The method further includes: when the identity of the second device is valid and the agent device meets the first preset condition, determining that the second device can join the video call between the first device and the agent device.

In a possible implementation, that the identity of the second device is valid includes: the second verification information is correct and within a first time period, where the first time period is a time period in which the second verification information is valid. That the agent device meets the first preset condition includes: the agent device is in a call state, and a destination identifier associated with the agent device indicates that the second device is allowed to join the video call between the first device and the agent device, where the destination identifier is associated with the second verification information, and the destination identifier is included in the first request message.

In the foregoing method, only when the second verification information sent by the second device is correct and is in the valid time period, and the agent device allows the second device to join the current video call between the first device and the agent device, the first network device determines that the second device can join the currently established video call. This avoids a case in which another user equipment joins the video call by mistake or the agent device does not support joining of the second device, improves security and confidentiality of the video call, and further improves user experience.

In a possible implementation, after the sending the first message to the second device, the method further includes: receiving a third request message sent by the second device, where the third request message is used for requesting to establish a media connection between the second device and the agent device, and the third request message includes the first verification information and the identifier of the agent device; determining, based on the third request message, whether a second preset condition is met currently; and establishing the second video call when the second preset condition is met.

In a possible implementation, that the second preset condition is met includes: the first verification information is correct and within a second time period, and the agent device meets the first preset condition, where the second time period is a time period in which the first verification information is valid.

In the foregoing method, after determining that the second device can join the currently established video call, the first network device redetermines, in a process of actually establishing the media connection between the second device and the agent device, whether the second preset condition is met currently, and establishes the second video call when the second preset condition is met. This ensures stability of the video call, and improves user experience.

In a possible implementation, the establishing the second video call includes: establishing a conference of the second video call; sending a fourth request message to the first device, sending a fifth request message to the second device, and sending a sixth request message to the agent device; and receiving a first response message sent by the first device based on the fourth request message, receiving a second response message sent by the second device based on the fifth request message, and receiving a third response message sent by the agent device based on the sixth request message, where the first response message indicates that the first device joins the conference of the second video call, the second response message indicates that the second device joins the conference of the second video call, and the third response message indicates that the agent device joins the conference of the second video call.

In the foregoing method, when a one-to-one (one user equipment corresponds to one agent device) video call is changed to a many-to-one (a plurality of user equipments correspond to one agent device) video call, the first network device needs to establish a conference of the new video call. The conference may be used to implement the multi-party video call process. The first network device may separately send request messages to the plurality of user equipments and the agent device, to invite these devices to join the conference for the video call.

In a possible implementation, the first request message is sent when the agent device obtains an identifier of the first device and the destination identifier associated with the agent device, and the destination identifier is set by the agent device based on a user operation.

According to a second aspect, an embodiment of this application provides a call method, applied to a second device, where the method includes: receiving a link message sent by a first network device, where the link message is used for requesting the second device to join a video call between a first device and an agent device, the link message is sent by the first network device based on a first request message, the first request message is sent by the agent device to the first network device in a process of a first video call, and the first video call is a video call that is between the first device and the agent device and that is established by the first network device and a second network device.

In a possible implementation, the method further includes: sending a second request message to the first network device based on the link message, where the second request message is used by the first network device to establish a second video call, and the second video call is used for a video call among the first device, the agent device, and the second device.

In a possible implementation, the first device supports a video call function of mobile communication, the second device does not support the video call function of mobile communication, and the second network device is a network device for mobile communication.

In a possible implementation, the sending the second request message to the first network device based on the link message includes: displaying the link message on a first interface, where the first interface includes a first control; receiving a first operation performed on the first control on the first interface; and sending the second request message to the first network device in response to the first operation.

In a possible implementation, after the sending the second request message to the first network device based on the link message, the method further includes: receiving a first message sent by the first network device, where the first message includes first verification information and an identifier of the agent device, and the first verification information is sent when the first network device determines that the second device can join the video call between the first device and the agent device.

In a possible implementation, after the receiving the first message sent by the first network device, the method further includes: sending a third request message to the first network device based on the first message, where the third request message is used by the first network device to establish the second video call, and the third request message includes the first verification information and the identifier of the agent device.

In a possible implementation, after the sending the third request message to the first network device, the method further includes: receiving a fourth request message sent by the first network device, where the fourth request message is sent when the first network device establishes a conference of the second video call; and sending a first response message to the first network device based on the fourth request message, where the first response message indicates that the second device joins the conference of the second video call.

According to a third aspect, an embodiment of this application provides a communication apparatus, including a processing unit, a receiving unit, and a sending unit. The receiving unit is configured to receive, in a process of a first video call, a first request message sent by an agent device, where the first video call is a video call that is between a first device and the agent device and that is established by a first network device and a second network device. The sending unit is configured to send a link message to a second device based on the first request message, where the link message is used for requesting the second device to join the video call between the first device and the agent device.

In a possible implementation, the receiving unit is configured to receive a second request message sent by the second device. The processing unit is configured to establish a second video call based on the second request message, where the second video call is used for a video call among the first device, the agent device, and the second device.

In a possible implementation, the first device supports a video call function of mobile communication, the second device does not support the video call function of mobile communication, and the second network device is a network device for mobile communication.

In a possible implementation, the processing unit is configured to determine, based on the second request message, whether the second device can join the video call between the first device and the agent device. The sending unit is configured to send a first message to the second device when it is determined that the second device can join the video call between the first device and the agent device, where the first message includes first verification information and an identifier of the agent device.

In a possible implementation, the second request message is sent by the second device based on the link message, the second request message includes second verification information and the identifier of the agent device, the second verification information is generated by the first network device based on the first request message, and the second verification information is associated with the identifier of the agent device. The processing unit is configured to: verify, based on the second verification information in the second request message, whether an identity of the second device is valid, and determine, based on the identifier of the agent device in the second request message, whether the agent device meets a first preset condition; and when the identity of the second device is valid and the agent device meets the first preset condition, determine that the second device can join the video call between the first device and the agent device.

In a possible implementation, that the identity of the second device is valid includes: the second verification information is correct and within a first time period, where the first time period is a time period in which the second verification information is valid. That the agent device meets the first preset condition includes: the agent device is in a call state, and a destination identifier associated with the agent device indicates that the second device is allowed to join the video call between the first device and the agent device, where the destination identifier is associated with the second verification information, and the destination identifier is included in the first request message.

In a possible implementation, the receiving unit is configured to receive a third request message sent by the second device, where the third request message is used for requesting to establish a media connection between the second device and the agent device, and the third request message includes the first verification information and the identifier of the agent device. The processing unit is configured to: determine, based on the third request message, whether a second preset condition is met currently; and establish the second video call when the second preset condition is met.

In a possible implementation, that the second preset condition is met includes: the first verification information is correct and within a second time period, and the agent device meets the first preset condition, where the second time period is a time period in which the first verification information is valid.

In a possible implementation, the processing unit is configured to establish a conference of the second video call. The sending unit is configured to send a fourth request message to the first device, send a fifth request message to the second device, and send a sixth request message to the agent device. The receiving unit is configured to receive a first response message sent by the first device based on the fourth request message, receive a second response message sent by the second device based on the fifth request message, and receive a third response message sent by the agent device based on the sixth request message, where the first response message indicates that the first device joins the conference of the second video call, the second response message indicates that the second device joins the conference of the second video call, and the third response message indicates that the agent device joins the conference of the second video call.

In a possible implementation, the first request message is sent when the agent device obtains an identifier of the first device and the destination identifier associated with the agent device, and the destination identifier is set by the agent device based on a user operation.

For technical effects brought by the third aspect or the possible implementations, refer to the descriptions of the technical effects of the first aspect or corresponding implementations.

According to a fourth aspect, an embodiment of this application provides a communication apparatus, including a processing unit, a receiving unit, and a sending unit. The receiving unit is configured to receive a link message sent by a first network device, where the link message is used for requesting a second device to join a video call between a first device and an agent device, the link message is sent by the first network device based on a first request message, the first request message is sent by the agent device to the first network device in a process of a first video call, and the first video call is a video call that is between the first device and the agent device and that is established by the first network device and a second network device.

In a possible implementation, the sending unit is configured to send a second request message to the first network device based on the link message, where the second request message is used by the first network device to establish a second video call, and the second video call is used for a video call among the first device, the agent device, and the second device.

In a possible implementation, the first device supports a video call function of mobile communication, the second device does not support the video call function of mobile communication, and the second network device is a network device for mobile communication.

In a possible implementation, the processing unit is configured to display the link message on a first interface, where the first interface includes a first control. The receiving unit is configured to receive a first operation performed on the first control on the first interface. The sending unit is configured to send the second request message to the first network device in response to the first operation.

In a possible implementation, the receiving unit is configured to receive a first message sent by the first network device, where the first message includes first verification information and an identifier of the agent device, and the first verification information is sent when the first network device determines that the second device can join the video call between the first device and the agent device.

In a possible implementation, the sending unit is configured to send a third request message to the first network device based on the first message, where the third request message is used by the first network device to establish the second video call, and the third request message includes the first verification information and the identifier of the agent device.

In a possible implementation, the receiving unit is configured to receive a fourth request message sent by the first network device, where the fourth request message is sent when the first network device establishes a conference of the second video call. The sending unit is configured to send a first response message to the first network device based on the fourth request message, where the first response message indicates that the second device joins the conference of the second video call.

For technical effects brought by the fourth aspect or the possible implementations, refer to the descriptions of the technical effects of the second aspect or corresponding implementations.

According to a fifth aspect, an embodiment of this application provides a communication apparatus. The communication apparatus includes at least one processor and a communication interface. The at least one processor invokes a computer program or instructions stored in a memory to perform the method according to the first aspect or the possible implementations of the first aspect.

According to a sixth aspect, an embodiment of this application provides a communication apparatus. The communication apparatus includes at least one processor and a communication interface. The at least one processor invokes a computer program or instructions stored in a memory to perform the method according to the second aspect or the possible implementations of the second aspect.

According to a seventh aspect, an embodiment of this application provides a chip apparatus. The chip apparatus includes at least one processor. The at least one processor is configured to execute a computer program or instructions, to implement the method according to any one of the foregoing aspects.

According to an eighth aspect, an embodiment of this application provides a computer-readable storage medium. The computer-readable storage medium stores a computer program or instructions. When the computer program or the instructions are run on a processor, the method according to any one of the foregoing aspects is implemented.

According to a ninth aspect, an embodiment of this application provides a computer program product. The computer program product includes a computer program or instructions. When the computer program or the instructions are run on a computer, the method according to any one of the foregoing aspects is implemented.

According to a tenth aspect, an embodiment of this application provides a communication system. The communication system includes the apparatus according to the third aspect and the apparatus according to the fourth aspect.

It should be understood that descriptions of technical features, technical solutions, beneficial effects, or similar languages in this application do not imply that all features and advantages can be implemented in any single implementation. On the contrary, it may be understood that descriptions of features or beneficial effects mean that at least one implementation includes specific technical features, technical solutions, or beneficial effects. Therefore, descriptions of technical features, technical solutions, or beneficial effects in this specification do not necessarily refer to a same implementation. Further, the technical features, technical solutions, and beneficial effects described in the implementations may be combined in any appropriate manner. A person skilled in the art may understand that an implementation may be implemented without one or more specific technical features, technical solutions, or beneficial effects in specific implementations. In other implementations, additional technical features and beneficial effects may also be identified in specific implementations that do not reflect all implementations.

### BRIEF DESCRIPTION OF DRAWINGS

The following describes the accompanying drawings used in this application.
FIG. 1 is a diagram of an architecture of a call system 10 according to this application;
FIG. 2 is a diagram of an architecture of another call system 10 according to this application;
FIG. 3A, FIG. 3B, and FIG. 3C are a schematic flowchart of a call method according to this application;
FIG. 4 is a schematic flowchart of another call method according to this application;
FIG. 5 is a schematic flowchart of still another call method according to this application;
FIG. 6 is a diagram of a structure of a communication apparatus 600 according to this application; and
FIG. 7 is a diagram of a structure of a communication apparatus 700 according to this application.

### DESCRIPTION OF EMBODIMENTS

The following describes technical solutions in embodiments of this application with reference to the accompanying drawings. In descriptions of embodiments of this application, "/" means "or" unless otherwise specified. For example, A/B may represent A or B. In this specification, "and/or" describes only an association relationship between associated objects, and represents that three relationships may exist. For example, A and/or B may represent the following three cases: Only A exists, both A and B exist, and only B exists. In addition, in descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

In embodiments of this application, a terminal device includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device having a wireless connection function or a processing device connected to a wireless modem. The terminal device may communicate with a core network via a radio access network (radio access network, RAN), exchange a voice or data with the RAN, or interact a voice and data with the RAN. The terminal device may include a user equipment (user equipment, UE), a wireless terminal device, a mobile terminal device, a D2D terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a light terminal device (light UE), a reduced capability user equipment (reduced capability UE, REDCAP UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, handheld, or computer built-in mobile apparatus. For example, the terminal device may be a device, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may further include a limited device, for example, a device with low power consumption, a device with a limited storage capability, or a device with a limited computing capability. For example, the terminal device includes an information sensing device, for example, a barcode, radio frequency identification (radio frequency identification, RFID), a sensor, a global positioning system (global positioning system, GPS), or a laser scanner.

By way of example but not limitation, in embodiments of this application, the terminal device may be a mobile phone, a tablet computer, an all-in-one personal computer, a desktop computer, a laptop computer, an ultra-mobile personal computer (ultra-mobile personal computer, UMPC), a netbook, a smart home device like a smart television or a projector, a wearable device like a smart band, a smart watch, or smart glasses, an extended reality (extended reality, XR) device like an augmented reality (augmented reality, AR) device, a virtual reality (virtual reality, VR) device, or a mixed reality (mixed reality, MR) device, or a vehicle-mounted device.

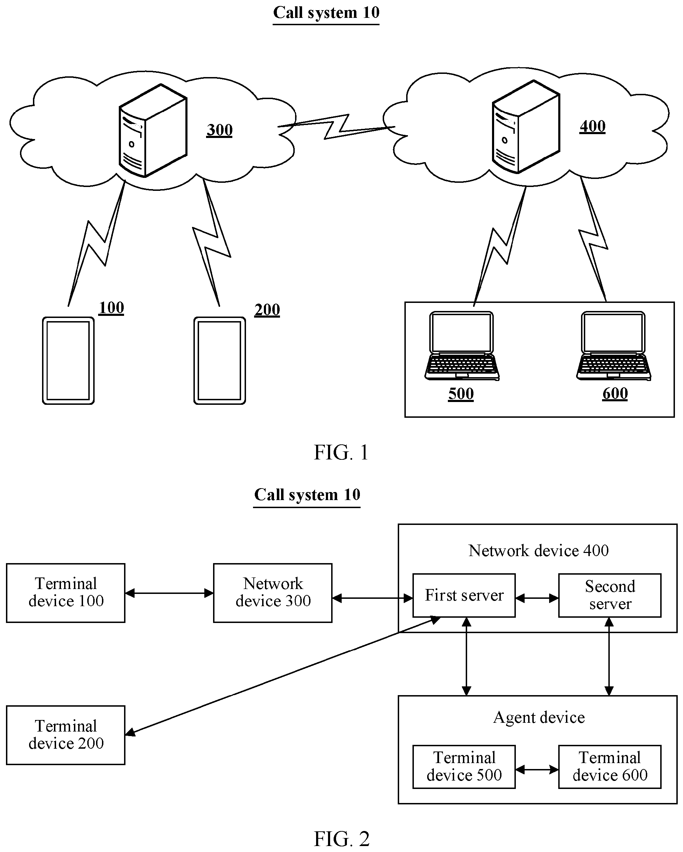

FIG. 1 is an example of a diagram of an architecture of a call system 10.

As shown in FIG. 1, the call system 10 may include a terminal device 100, a terminal device 200, a network device 300, a network device 400, a terminal device 500, and a terminal device 600. The call system 10 may be a cellular communication system. The cellular communication system is, for example, but is not limited to, a global system for mobile communications (global system for mobile communications, GSM), code division multiple access (code division multiple access, CDMA), wideband code division multiple access (wideband code division multiple access, WCDMA), time division synchronous code division multiple access (time division synchronous code division multiple access, TD-SCDMA), long term evolution (long term evolution, LTE), new radio (new radio, NR) access, or another future network system.

The call system 10 may be used in a call center application scenario. The terminal device 100 and the terminal device 200 are user equipments, and the terminal device 500 and the terminal device 600 are agent devices. The call center application scenario is a scenario in which an agent device provides services for a user equipment (a customer) by using video calls or voice calls. The network device 400 may be configured to determine, from at least one agent device, an idle agent device to provide services for the user equipment (the customer). The network device 300 may be configured to implement communication between the user equipment and a call center side. The network device 300 is, for example, a core network device or an access network device of an operator. The network device 400 and the agent device may be collectively referred to as the call center side. In an implementation, in the call center application scenario, the terminal device 100 (or the terminal device 200) may communicate with the terminal device 500 (or the terminal device 600) over a cellular communication network, to implement an operator call (for example, a video call or a voice call of mobile communication). In embodiments of this application, the video call is a VoLTE video call (namely, a video call of mobile communication) based on a cellular communication network in a call center application scenario, and the voice call is a voice call (namely, a voice call of mobile communication) based on a cellular communication network in a call center application scenario.

In this embodiment of this application, the network device 300 includes, for example, an access network (access network, AN) device, for example, a base station (for example, an access point), and may be a device that is in an access network and that communicates with a wireless terminal device through an air interface in one or more cells. Alternatively, the network device is, for example, a road side unit (road side unit, RSU) in a vehicle-to-everything (vehicle-to-everything, V2X) technology. The base station may be configured to perform mutual conversion between a received over-the-air frame and an IP packet, and serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system, may include a next generation NodeB (next generation NodeB, gNB) in a 5th generation (5th generation, 5G) mobile communication technology NR system (also referred to as an NR system for short), or may include a central unit (central unit, CU) and a distributed unit (distributed unit, DU) in a cloud radio access network (cloud radio access network, Cloud RAN) system. This is not limited in embodiments of this application.

The network device 300 may further include a core network device. The core network device includes, for example, an access and mobility management function (access and mobility management function, AMF), a user plane function (user plane function, UPF), or a session management function (session management function, SMF).

In this embodiment of this application, the network device 400 may include at least one server. In an implementation, any server may be a hardware server. In an implementation, any server may be a cloud server. In an implementation, the network device 300 may be a Linux server, a Windows server, or another server device that can be accessed by a plurality of devices at the same time. In an implementation, the network device 300 may be a server cluster including a plurality of regions, a plurality of equipment rooms, and a plurality of servers.

It may be understood that quantities and forms of terminal devices and network devices in the call system 10 shown in FIG. 1 are merely examples. During specific implementation, there may be more or fewer terminal devices and network devices. For example, the call system 10 may further include another user equipment and agent device. This is not limited in this application.

In an implementation, it is assumed that the terminal device 100 supports a video call function. For example, the terminal device 100 is registered with and stored in the network device 300 (for example, a VoLTE telecommunication network device), the terminal device 200 supports a voice call function but does not support the video call function, and the terminal device 500 and the terminal device 600 are agent devices.

In the call center application scenario, the terminal device 100 may send a request message 1 to the network device 300. The request message 1 may include identification information for a call session, for example, a number of the agent device. The request message 1 may be used for requesting to establish a video call between the terminal device 100 and the agent device. After receiving the request message 1, the network device 300 may determine, based on identification information (for example, a phone number) of the terminal device 100, that the terminal device 100 supports the video call function, and send a request message 2 to the network device 400. The network device 400 may select an agent device in an idle state (assumed to be the terminal device 500) from a plurality of agent devices based on the request message 2, and establish a video call between the terminal device 100 and the terminal device 500.

Then, during the video call between the terminal device 100 and the terminal device 500, a new user equipment (assumed to be the terminal device 200) needs to be invited to join the current call. The terminal device 500 may send a request message 3 to the network device 400. The request message 3 may include information about the invited user equipment, for example, an identification code (for example, a phone number) of the terminal device 200. The network device 300 may determine, based on the request message 3, that the terminal device 200 does not support the video call function. Therefore, the network device 300 may send a request message 4 to the terminal device 200. The request message 4 may be used for requesting the terminal device 200 to join the current video call in a voice call manner. The terminal device 200 may display an incoming call notification on a call interface based on the request message 4, and determine, in response to the request message 4, to join the current video call. Only a voice call can be established among the terminal device 200 that joins the call, the terminal device 100, and the terminal device 500, but a video call cannot be established.

It may be understood that, in the call center application scenario shown in FIG. 1, when a third-party user equipment (the terminal device 200) does not support the video call function, for example, when the third-party user equipment is limited by a device standard of a vendor or a network state of the terminal device 200 does not support use of the video call function, or when the agent device (the terminal device 500) invites the third-party user equipment to join the established video call by the network device 400 and the network device 300, the network device 300 can only allow the third-party user equipment to join the current video call in a voice call manner, but a video call among the third-party user equipment, another user equipment (the terminal device 100), and the agent device cannot be established. As a result, user experience is affected. In addition, because information about the third-party user equipment is not registered with and stored in the network device 300 (for example, the VoLTE telecommunication network device), the third-party user equipment cannot actively initiate a video call to the agent device via the network device 300 and the network device 400. In an implementation, the agent device may be in an idle state or a call state, and generally, one agent device establishes a call (a video call or a voice call) with one user equipment.

Embodiments of this application provide a call method, applied to the call system 10. In the method, in the foregoing call center application scenario, when the third-party user equipment does not support the video call function, the agent device does not need to invite, via the network device 300, the third-party user equipment to join the established video call, but directly sends a link message to the third-party user equipment via the network device 400. The third-party user equipment may choose, based on the link message, whether to join the current video call. When determining, in response to a user operation, to join the current video call, the third-party user equipment may directly join the current video call via the network device 400, without communicating with the network device 300. In this manner, a process in which the network device 300 verifies whether the third-party user equipment has the video call function is avoided. Therefore, the third-party user equipment that supports only the voice call function can also join the video call process. In other words, the third-party user equipment that does not support the video call function can join the established video call in a manner of actively responding to the link message. In addition, the agent device may receive an incoming call request of the third-party user equipment in a process of processing a current user equipment, to implement a multi-party video call process, thereby improving user experience. In addition, in this manner, a multi-party video call can be implemented without a need of registering the third-party user equipment with the network device 300 and storing the third-party user equipment in the network device 300 in advance, and without a need of installing a third-party application. When determining to join the current video call, the third-party user equipment may autonomously establish a media connection, without affecting another terminal device in the current video call.

FIG. 2 is a diagram of an architecture of another call system 10 according to an embodiment of this application.

The call system 10 shown in FIG. 2 is similar to the call system 10 shown in FIG. 1. A difference lies in that a terminal device 200 in FIG. 2 does not establish a communication connection to a network device 300, but establishes a communication connection to a network device 400 (for example, a first server in the network device 400). The network device 400 in FIG. 2 may include the first server and a second server. The first server may be configured to control and manage a call session and a media service, for example, establish SIP signaling and a media connection between a user equipment and the first server. The second server may be configured to manage an agent device and a routing service, for example, manage a status of the agent device and routing allocation of the agent device.

In a call center application scenario, a terminal device 100 may be in a process of a video call with a terminal device 500 in agent devices. A process of establishing a video call between the terminal device 100 and the terminal device 500 is similar to the process of establishing the video call between the terminal device 100 and the terminal device 500 in FIG. 1. A difference lies in that, after the network device 400 receives the foregoing request message 2, the second server selects the terminal device 500 from a plurality of agent devices, and optionally returns an identifier of the terminal device 500 to the first server. Then, the first server establishes the video call between the terminal device 100 and the terminal device 500 based on the identifier of the terminal device 500 and an identifier of the terminal device 100. Details are not described herein again. Then, the terminal device 500 may be set to be allowed to receive a call request of a third-party user equipment. The third-party user equipment may support only a voice call function. The terminal device 500 may send link information to the third-party user equipment (the terminal device 200) via the first server. A manner of sending the link message is, for example, but is not limited to, sending the link message by using an SMS message or a social media channel (for example, a chat application or an email application). The link message may include a token 1 (Token 1), and the link message may be used for prompting the terminal device 200 to join the current video call. The terminal device 200 may respond to the link message, and send a request message 5 to the first server. The request message 5 is used for requesting to join the current video call, and the request message 5 may include the token 1. After receiving the request message 5, the first server may determine, based on the token 1, whether to allow the terminal device 200 to join the current video call, and obtain the identifier of the terminal device 500 based on the token 1. When determining that the terminal device 200 can join the current video call, the first server may create a new call session. Devices participating in the call session may include the terminal device 200 and the terminal device 500. The first server may send an application message 1 to the second server. The application message 1 may include the identifier of the terminal device 500. The second server may determine, based on the application message 1, whether the terminal device 500 meets a first preset condition (for example, whether the terminal device 500 is in a call state and whether to allow the terminal device 200 to join the current call). When determining that the terminal device 500 meets the first preset condition (for example, when the terminal device 500 is in a call state and allows joining of the terminal device 200), the second server may send a called message to the terminal device 200 via the first server, and the called message may include a token 2 (Token 2), the identifier of the terminal device 500, and the like. After receiving the called message, the terminal device 200 may send an invite message 1 to the first server. The invite message 1 may include the token 2, the identifier of the terminal device 500, and the like, and is used for requesting to establish SIP signaling and a media connection between the terminal device 200 and the first server. The first server may send an application message 2 to the second server based on the invite message 1. The application message 2 may include the token 2 and the identifier of the terminal device 500. The second server may determine whether the application message 2 currently meets a second preset condition (for example, whether the token 2 is correct and valid, and whether the terminal device 500 meets the first preset condition). When determining that the application message 2 meets the second preset condition (for example, the token 2 is correct and valid, and the terminal device 500 meets the first preset condition), optionally, the second server may return the identifier of the terminal device 500 to the first server. The first server may disconnect the current video call between the terminal device 100 and the terminal device 500, create a conference of a new video call, and request the terminal device 200, the terminal device 100, and the terminal device 500 to join the conference of the video call, to implement a video call between a plurality of devices in the conference.

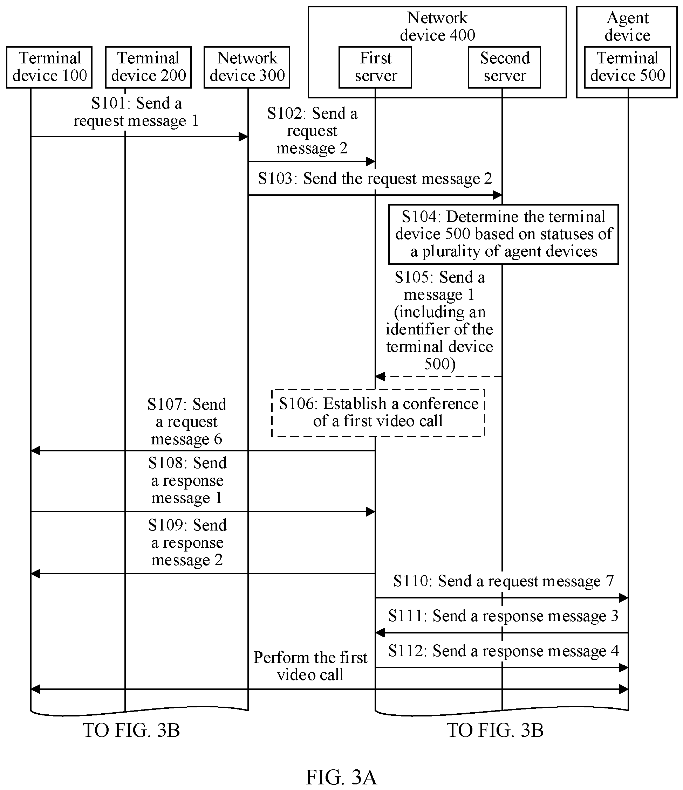

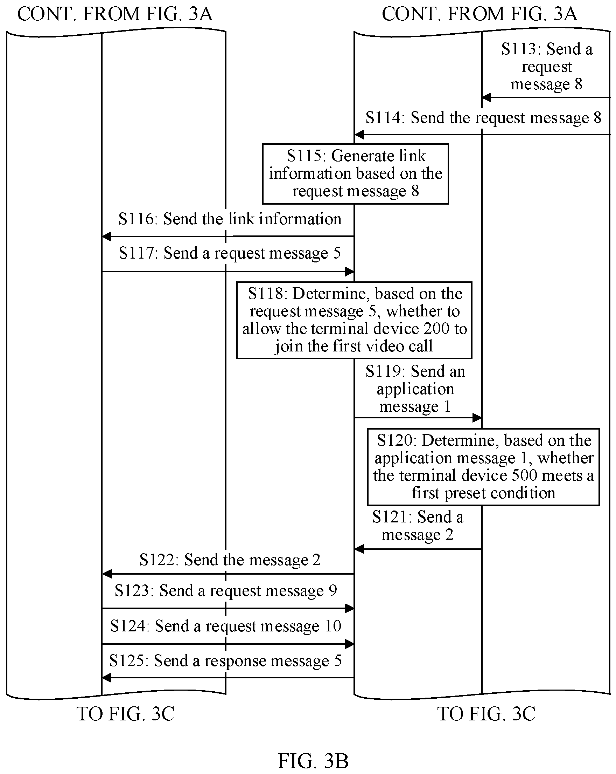

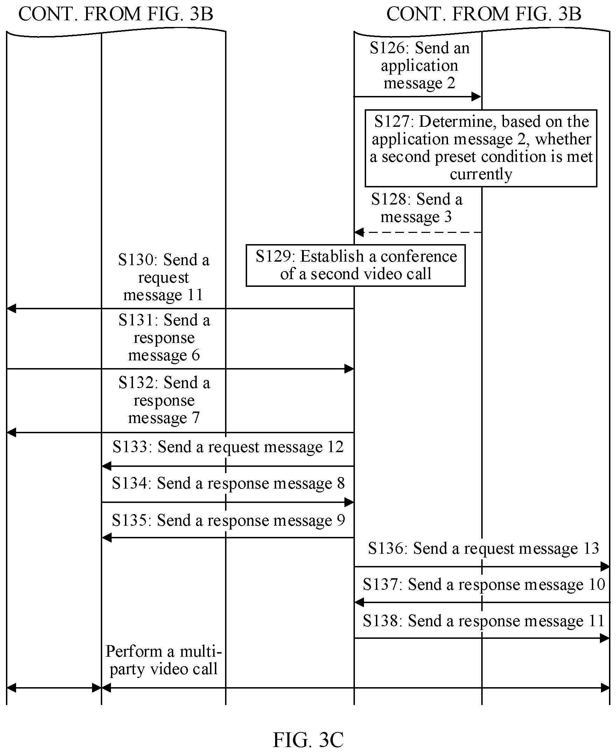

FIG. 3A, FIG. 3B, and FIG. 3C are a schematic flowchart of a call method according to an embodiment of this application. The method may be applied to the architecture of the call system 10 shown in FIG. 2. The method may include but is not limited to the following steps.

S101: A terminal device 100 sends a request message 1 to a network device 300.

In an implementation, the terminal device 100 may be a user equipment, and the terminal device 100 may support a video call function. For example, the terminal device 100 is registered with and stored in the network device 300. The network device 300 is, for example, a VoLTE telecommunication network device.

In an implementation, the request message 1 may be used for requesting to establish a video call between the terminal device 100 and an agent device. The request message 1 may include identification information for a call session, for example, a number of the agent device.

S102: The network device 300 sends a request message 2 to a first server.

In an implementation, the first server may be configured to control and manage the call session and a media service, for example, establish SIP signaling and a media connection between a user equipment and the first server.

In an implementation, after receiving the request message 1, the network device 300 may determine that the terminal device 100 supports the video call function, and send the request message 2 to the first server. For descriptions of the request message 2, refer to the descriptions of the request message 1 in S101 in FIG. 3A. Details are not described again.

S103: The network device 300 sends the request message 2 to a second server.

In an implementation, the second server may be configured to manage the agent device and a routing service, for example, manage a status of the agent device and routing allocation of the agent device.

In an implementation, after receiving the request message 1, the network device 300 may determine that the terminal device 100 supports the video call function, and send the request message 2 to the second server.

A sequence of S102 and S103 is not limited.

S104: The second server determines a terminal device 500 based on statuses of a plurality of agent devices.

In an implementation, the status of the agent device may include an idle state and a call state. In some examples, after receiving the request message 2, the second server may obtain current statuses of the plurality of agent devices, select an agent device in an idle state (assumed to be the terminal device 500), and use the terminal device 500 as an agent device of the current call session.

S105: The second server sends a message 1 to the first server.

In an implementation, S105 is an optional step.

In an implementation, the message 1 may indicate that the terminal device 500 is the agent device of the current call session.

S106: The first server establishes a conference of a first video call.

In an implementation, S106 is an optional step.

In an implementation, participating devices of the conference of the first video call may include the terminal device 100 and the terminal device 500. The conference of the first video call may be used for requesting a corresponding device to join the conference, to implement a video call between a plurality of devices in the conference. In some examples, after determining that the agent device of the current call session is the terminal device 500 and the user equipment is the terminal device 100, the first server may establish the conference of the first video call.

S107: The first server sends a request message 6 to the terminal device 100.

In an implementation, the request message 6 may be used for requesting the terminal device 100 to join the first video call.

S108: The terminal device 100 sends a response message 1 to the first server.

In an implementation, the response message 1 may indicate that the terminal device 100 determines to join the first video call.

S109: The first server sends a response message 2 to the terminal device 100.

In an implementation, the response message 2 may indicate that the terminal device 100 has joined the first video call.

S110: The first server sends a request message 7 to the terminal device 500.

In an implementation, the request message 7 may be used for requesting the terminal device 500 to join the first video call.

S111: The terminal device 500 sends a response message 3 to the first server.

In an implementation, the response message 3 may indicate that the terminal device 500 determines to join the first video call.

S112: The first server sends a response message 4 to the terminal device 500.

In an implementation, the response message 4 may indicate that the terminal device 500 has joined the first video call.

In an implementation, after S112, the first video call may be performed between the terminal device 100 and the terminal device 500.

A sequence of S107 to S109 and S110 to S112 is not limited.

S113: The terminal device 500 sends a request message 8 to the second server.

In an implementation, during the first video call between the terminal device 100 and the terminal device 500, when receiving an identifier (for example, a phone number) that is of a third-party user equipment and that is input or selected by a user, the terminal device 500 may determine that the third-party user equipment needs to be invited to join the current first video call. In this case, the terminal device 500 may set an access identifier of the third-party user equipment to allow in response to a user operation. That the access identifier is allow may represent that the terminal device 500 is allowed to receive a call request of the third-party user equipment. The third-party user equipment may support only a voice call function. FIG. 3A, FIG. 3B, and FIG. 3C are described by using an example in which the third-party user equipment is a terminal device 200 and the access identifier indicates that a call request of the terminal device 200 is allowed to be received.

In an implementation, after setting the access identifier, the terminal device 500 may send the request message 8 to the second server. The request message 8 may include the access identifier of the third-party user equipment. The access identifier is, for example, used for performing the following S118 and S120.

S114: The terminal device 500 sends the request message 8 to the first server.

A sequence of S113 and S114 is not limited.

S115: The first server generates link information based on the request message 8.

In an implementation, after receiving the request message 8, the first server may generate a token 1 and a valid time period of the token 1, and associate the token 1 with an identifier of the current agent device (the terminal device 500), the access identifier, and call information. The identifier of the agent device is, for example, an agent number. The call information may identify a call session between the terminal device 500 and the third-party user equipment. The call session may be used by the third-party user equipment to send a call request to the terminal device 500. In some examples, the link message may include the token 1.

S116: The first server sends the link message to the terminal device 200.

In an implementation, the link message may be used for prompting the terminal device 200 to join the current first video call. The first server may send the link message to the terminal device 200 by using an SMS message or a social media channel (for example, a chat application or an email application).

S117: The terminal device 200 sends a request message 5 to the first server.

In an implementation, after receiving the link message, the terminal device 200 may display the link message, for example, display the link message on an SMS message interface or a third-party application interface. Then, the terminal device 200 may receive a user operation (for example, the user operation is a touch operation) for the link message, determine, in response to the user operation, to join the current first video call, and send the request message 5 to the first server. In some examples, the request message 5 may be used for requesting to join the current first video call, and the request message 5 may include the token 1.

S118: The first server determines, based on the request message 5, whether to allow the terminal device 200 to join the first video call.

In an implementation, after receiving the request message 5, the first server may determine, based on the token 1 in the request message 5, whether to allow the terminal device 200 to join the current first video call. In some examples, the first server may determine whether the token 1 is correct and is in the valid time period, and obtain, based on the token 1, the identifier of the terminal device 500 and the access identifier that are associated with the token 1.

In an implementation, when the token 1 is correct and is in the valid time period, and the access identifier indicates that the call request of the terminal device 200 is allowed to be received, it is determined that the terminal device 200 can join the current first video call. The first server may set the token 1 to be invalid, and create a new call session and an identifier (for example, CallId) of the call session. Devices participating in the call session may include the terminal device 200 and the terminal device 500.

S119: The first server sends an application message 1 to the second server.

In an implementation, the application message 1 may include the identifier of the terminal device 500, and the application message 1 may be used for performing route addressing on the terminal device 500.

S120: The second server determines, based on the application message 1, whether the terminal device 500 meets a first preset condition.

In an implementation, the first preset condition may include whether the terminal device 500 is in a call state and whether the terminal device 500 allows the terminal device 200 to join the current first video call.

In an implementation, the second server may parse the application message 1, and detect a current state of the terminal device 500 and the access identifier based on the identifier of the terminal device 500. When the terminal device 500 meets the first preset condition, to be specific, when the terminal device 500 is in a call state, and the terminal device 500 in a call state is allowed to receive the call request of the terminal device 200, the second server may generate a token 2 and a valid time period of the token 2.

S121: The second server sends a message 2 to the first server.

In an implementation, the message 2 may include the token 2 and the identifier of the terminal device 500.

S122: The first server sends the message 2 to the terminal device 200.

S123: The terminal device 200 sends a request message 9 to the first server.

In an implementation, the request message 9 may include the token 2 and the identifier of the terminal device 500, and the request message 9 may be used for requesting to establish SIP signaling and a media connection between the terminal device 200 and the first server.

S124: The terminal device 200 sends a request message 10 to the first server.

In an implementation, the request message 10 may indicate that the terminal device 200 (a calling party) requests for establishing a media connection to the terminal device 500 (a called party), and waits for a response from the terminal device 500. For example, the terminal device 200 rings.

In an implementation, a request message 10 and the request message 9 in S123 may be one request message.

S125: The first server sends a response message 5 to the terminal device 200.

In an implementation, after receiving the request message 9, the first server may return the response message 5 to the terminal device 200. The response message 5 may indicate that the terminal device 500 has responded.

S126: The first server sends an application message 2 to the second server.

In an implementation, the application message 2 may include the token 2 and the identifier of the terminal device 500, and the application message 2 may be used for performing route addressing on the terminal device 500.

S127: The second server determines, based on the application message 2, whether a second preset condition is met currently.

In an implementation, the second preset condition may include whether the token 2 is correct and is in the valid time period, and whether the terminal device 500 meets the first preset condition. For descriptions of the first preset condition, refer to the specific descriptions of S120 in FIG. 3B. Details are not described again.

In an implementation, the second server may parse the application message 2, detect a current state of the terminal device 500 and the access identifier based on the identifier of the terminal device 500, and determine whether the token 2 in the application message 2 is correct and is in the valid time period. When the second preset condition is met, to be specific, when the token 2 is correct and valid, and the terminal device 500 meets the first preset condition, the second server may set the token 2 to be invalid, and optionally perform S128.

S128: The second server sends a message 3 to the first server.

In an implementation, S128 is an optional step.

In an implementation, the message 3 may include the identifier of the terminal device 500.

S129: The first server establishes a conference of a second video call.

In an implementation, participating devices of the conference of the second video call may include the terminal device 100, the terminal device 200, and the terminal device 500. Descriptions of the conference of the second video call is similar to the descriptions of the conference of the first video call in S106 in FIG. 3A. For details, refer to the descriptions of the conference of the first video call. Details are not described again.

S130: The first server sends a request message 11 to the terminal device 100.

In an implementation, the request message 11 may be used for requesting the terminal device 100 to join the second video call.

S131: The terminal device 100 sends a response message 6 to the first server.

In an implementation, the response message 6 may indicate that the terminal device 100 determines to join the second video call.

S132: The first server sends a response message 7 to the terminal device 100.

In an implementation, the response message 7 may indicate that the terminal device 100 has joined the second video call.

S133: The first server sends a request message 12 to the terminal device 200.

In an implementation, the request message 12 may be used for requesting the terminal device 200 to join the second video call.

S134: The terminal device 200 sends a response message 8 to the first server.

In an implementation, the response message 8 may indicate that the terminal device 200 determines to join the second video call.

S135: The first server sends a response message 9 to the terminal device 200.

In an implementation, the response message 9 may indicate that the terminal device 200 has joined the second video call.

A sequence of S130 to S132 and S133 to S135 is not limited.

S136: The first server sends a request message 13 to the terminal device 500.

In an implementation, the request message 13 may be used for requesting the terminal device 500 to join the second video call.

S137: The terminal device 500 sends a response message 10 to the first server.

In an implementation, the response message 10 may indicate that the terminal device 500 determines to join the second video call.

S138: The first server sends a response message 11 to the terminal device 500.

In an implementation, the response message 11 may indicate that the terminal device 500 has joined the second video call.

In an implementation, after S138, a multi-party video call may be performed among the terminal device 100, the terminal device 200, and the terminal device 500.

A sequence of S133 to S135 and S136 to S138 is not limited.

In an implementation, after S128 and before S129, the first server may disconnect the first video call between the terminal device 100 and the terminal device 500. For example, the first server may separately send a request message 14 to the terminal device 100 and the terminal device 500. The request message 14 is used for requesting the terminal device 100/the terminal device 500 to disconnect the first video call. After separately receiving the request message, the terminal device 100 and the terminal device 500 may separately return a response message 12 to the first server. The response message 12 indicates that the terminal device 100/the terminal device 500 determines to disconnect the first video call. Then, the first server may separately send a response message 13 to the terminal device 100 and the terminal device 500. The response message 13 indicates that the terminal device 100/the terminal device 500 has disconnected the first video call.

In an implementation, after S138, the terminal device 500 may further invite a fourth-party user equipment to join the current second video call. A specific process is similar to S113 to S138. A difference lies in that a called party in this case is not the third-party user equipment (the terminal device 200) but the fourth-party user equipment (assumed to be a terminal device 700). In this case, a new video call conference does not need to be established, and the fourth-party user equipment may be directly requested to join the conference of the second video call, to implement a video call among the terminal device 100, the terminal device 200, the terminal device 700, and the terminal device 500.

The foregoing example in which the fourth-party user equipment (the terminal device 700) is invited to join the current second video call after the third-party user equipment (the terminal device 200) is invited constitutes no limitation. In another implementation, after S112, the terminal device 500 may invite the terminal device 200 and the terminal device 700 to join the current first video call process at the same time. A specific process is similar to S113 to S138. A difference lies in that a process of interaction between the terminal device 500 and the terminal device 700 is further included. The process of interaction between the terminal device 500 and the terminal device 700 is similar to a process of interaction between the terminal device 500 and the terminal device 200. Details are not described again.

In the method shown in FIG. 3A, FIG. 3B, and FIG. 3C, in a call center application scenario, when the third-party user equipment does not support the video call function, the agent device does not need to invite, via the network device 300, the third-party user equipment to join the established video call, but directly sends the link message to the third-party user equipment via a network device 400. The third-party user equipment may choose, based on the link message, whether to join the current video call. When determining, in response to a user operation, to join the current video call, the third-party user equipment may directly join the current video call via the network device 400, without communicating with the network device 300. In this manner, a process in which the network device 300 verifies whether the third-party user equipment has the video call function is avoided. Therefore, the third-party user equipment that supports only the voice call function can also join the video call process. In other words, the third-party user equipment that does not support the video call function can join the established video call in a manner of actively responding to the link message. In addition, the agent device may receive an incoming call request of the third-party user equipment in a process of processing the current user equipment, to implement a multi-party video call process, thereby improving user experience. In addition, in this manner, a multi-party video call can be implemented without a need of registering the third-party user equipment with the network device 300 and storing the third-party user equipment in the network device 300 in advance, and without a need of installing a third-party application. When determining to join the current video call, the third-party user equipment may autonomously establish a media connection, without affecting another device in the current video call.

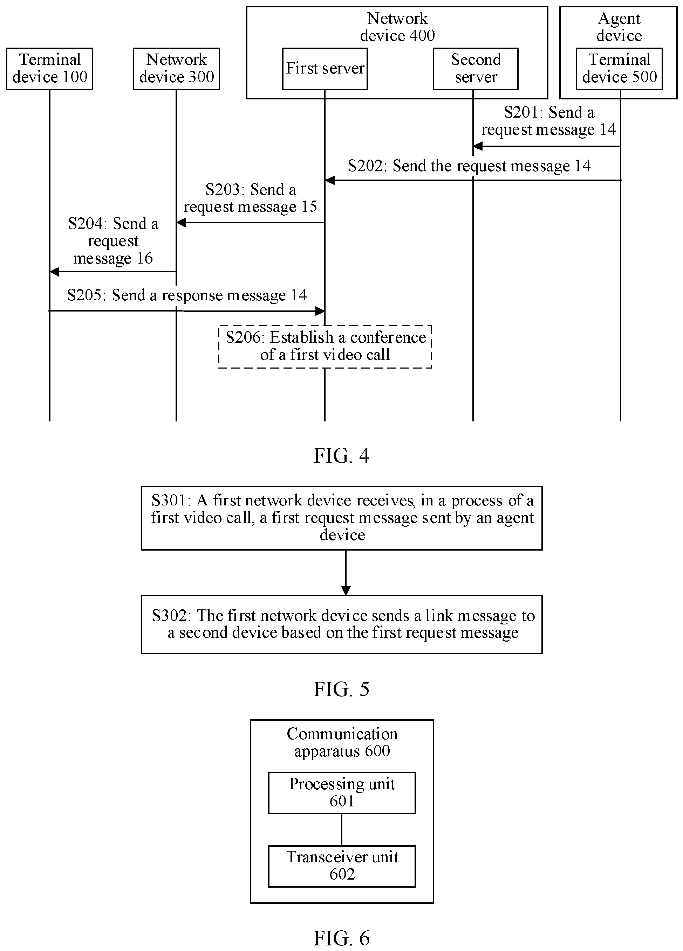

The implementation shown in FIG. 3A, FIG. 3B, and FIG. 3C constitutes no limitation. In another implementation, a process in which the terminal device 100 actively establishes the first video call with the terminal device 500 in S101 to S106 may be replaced with the following: The terminal device 500 actively establishes the first video call with the terminal device 100. FIG. 4 is a schematic flowchart of another call method according to an embodiment of this application. The method may be applied to the architecture of the call system 10 shown in FIG. 2. The method may include but is not limited to the following steps.

S201: A terminal device 500 sends a request message 14 to a second server.

In an implementation, the terminal device 500 may be an agent device in an idle state in a plurality of agent devices. For descriptions of the second server, refer to the descriptions of the second server in S103 in FIG. 3A. Details are not described again.

In an implementation, the request message 14 may be used for requesting to establish a video call between the terminal device 500 and a terminal device 100. The request message 14 may include identification information for a call session, for example, a number of the terminal device 100. In some examples, the terminal device 100 may support a video call function. For example, the terminal device 100 is registered with and stored in a network device 300. The network device 300 is, for example, a VoLTE telecommunication network device.

S202: The terminal device 500 sends the request message 14 to a first server.

In an implementation, for descriptions of the first server, refer to the descriptions of the first server in S102 in FIG. 3A. Details are not described again.

A sequence of S201 and S202 is not limited.

S203: The first server sends a request message 15 to the network device 300.

In an implementation, for descriptions of the request message 15, refer to the descriptions of the request message 14 in S201 in FIG. 4. Details are not described again.

S204: The network device 300 sends a request message 16 to the terminal device 100.

In an implementation, after receiving the request message 15, the network device 300 may determine that the terminal device 100 supports the video call function, perform route addressing on the terminal device 100, and send the request message 16 to the terminal device 100.

In an implementation, the request message 16 may be used for requesting the terminal device 100 to establish a call with the terminal device 500 in a video call manner.

S205: The terminal device 100 sends a response message 14 to the first server.

In an implementation, the terminal device 100 may display an incoming call notification on a call interface based on the received request message 16. Then, the terminal device 100 may receive a user operation (for example, the user operation is a touch operation) for the request message 16, determine, in response to the user operation, to establish the video call with the terminal device 500, and send the response message 14 to the first server.

In an implementation, the response message 14 may indicate that the terminal device 100 determines to establish the video call with the terminal device 500.

S206: The first server establishes a conference of the first video call.

In an implementation, S206 is an optional step.

In an implementation, for descriptions of S206, refer to the descriptions of S106 in FIG. 3A. Details are not described again.

After the implementation shown in FIG. 4, that is, after S206, the method may further include S107 to S138 in FIG. 3A, FIG. 3B, and FIG. 3C.

In the method shown in FIG. 4, the agent device may actively call a user equipment, and establish a video call with the user equipment. Then, the agent device may invite a third-party user equipment to join the current video call. In this manner, a scope of applicable call center application scenarios is expanded.

FIG. 5 is a schematic flowchart of still another call method according to an embodiment of this application. The method may be applied to the architecture of the call system 10 shown in FIG. 2. The method may include but is not limited to the following steps.

S301: A first network device receives, in a process of a first video call, a first request message sent by an agent device.

In an implementation, the first video call is a video call that is between a first device and the agent device and that is established by the first network device and a second network device. The first network device may be a network device 400, the second network device may be a network device 300, the first device may be a terminal device 100, and the agent device may be a terminal device 500. For a process of establishing the first video call, refer to S101 to S112 in FIG. 3A. Details are not described again.

In an implementation, the first device may support a video call function of mobile communication, a second device does not support the video call function of mobile communication, and the second network device may be a network device for mobile communication, for example, a VoLTE telecommunication network device.

In an implementation, the first request message is sent when the agent device obtains an identifier of the first device and a destination identifier associated with the agent device. The destination identifier is set by the agent device based on a user operation. For descriptions of the destination identifier, refer to the descriptions of the access identifier in S113 in FIG. 3B. Details are not described again.

In an implementation, for descriptions of S301, refer to the descriptions of S113 in FIG. 3B. Details are not described again.

S302: The first network device sends a link message to the second device based on the first request message.

In an implementation, the link message may be used for requesting the second device to join the video call between the first device and the agent device. For descriptions of the link message, refer to the descriptions of the link message in S115 and S116 in FIG. 3B. Details are not described again.

In an implementation, after S302, the first network device may receive a second request message sent by the second device, and establish a second video call based on the second request message. The second video call may be used for a video call among the first device, the agent device, and the second device. For descriptions of the second request message, refer to the descriptions of the request message 5 in S117 in FIG. 3B. Details are not described again.

In an implementation, the first network device may determine, based on the second request message, whether the second device can join the video call between the first device and the agent device. When determining that the second device can join the video call between the first device and the agent device, the first network device may send a first message to the second device. The first message may include first verification information and an identifier of the agent device. For specific descriptions, refer to the descriptions of S118 to S122 in FIG. 3B. For descriptions of the first message, refer to the descriptions of the message 2 in S121 in FIG. 3B. Details are not described again.

In an implementation, the second request message is sent by the second device based on the link message, and the second request message may include second verification information and the identifier of the agent device. The second verification information is generated by the first network device based on the first request message, and the second verification information is associated with the identifier of the agent device. For specific descriptions, refer to the descriptions of S117 in FIG. 3B. Details are not described again.

In an implementation, the first network device may verify, based on the second verification information in the second request message, whether an identity of the second device is valid, and determine, based on the identifier of the agent device in the second request message, whether the agent device meets a first preset condition. When the identity of the second device is valid and the agent device meets the first preset condition, the first network device may determine that the second device can join the video call between the first device and the agent device. For specific descriptions, refer to the descriptions of S118 and S120 in FIG. 3B. Details are not described again.

In an implementation, that the identity of the second device is valid includes: the second verification information is correct and within a first time period, where the first time period is a time period in which the second verification information is valid. That the agent device meets the first preset condition includes: the agent device being in a call state, and the destination identifier associated with the agent device indicating that the second device is allowed to join the video call between the first device and the agent device.

In an implementation, after sending the first message to the second device, the first network device may receive a third request message sent by the second device. The third request message is used for requesting to establish a media connection between the second device and the agent device, and the third request message includes the first verification information and the identifier of the agent device. The first network device may determine, based on the third request message, whether a second preset condition is met currently. When the second preset condition is met, the first network device may establish the second video call. For specific descriptions, refer to the descriptions of S123 to S138 in FIG. 3B and 3C. For descriptions of the third request message, refer to the descriptions of the request message 9 in S123 in FIG. 3B. Details are not described again.

In an implementation, that the second preset condition is met includes: the first verification information is correct and within a second time period, and the agent device meets the first preset condition, where the second time period is a time period in which the first verification information is valid.

In an implementation, the first network device may establish a conference of the second video call, send a fourth request message to the first device, send a fifth request message to the second device, and send a sixth request message to the agent device. Then, the first network device may receive a first response message sent by the first device based on the fourth request message, receive a second response message sent by the second device based on the fifth request message, and receive a third response message sent by the agent device based on the sixth request message. The first response message indicates that the first device joins the conference of the second video call, the second response message indicates that the second device joins the conference of the second video call, and the third response message indicates that the agent device joins the conference of the second video call. For specific descriptions, refer to the descriptions of S129 to S138 in FIG. 3C. Details are not described again.

In the method shown in FIG. 5, in a call center application scenario, when a third-party user equipment (the second device) does not support the video call function, the agent device does not need to invite the third-party user equipment to join the established video call via the second network device, but directly sends the link message to the third-party user equipment via the first network device. The third-party user equipment may choose, based on the link message, whether to join the current video call. When determining, in response to a user operation, to join the current video call, the third-party user equipment may directly join the current video call via the first network device, without communicating with the second network device. In this manner, a process in which the second network device verifies whether the third-party user equipment has the video call function is avoided. Therefore, the third-party user equipment that supports only the voice call function can also join the video call process. In other words, the third-party user equipment that does not support the video call function can join the established video call in a manner of actively responding to the link message. In addition, the agent device may receive an incoming call request of the third-party user equipment in a process of processing the current user equipment, to implement a multi-party video call process, thereby improving user experience. In addition, in this manner, a multi-party video call can be implemented without a need of registering the third-party user equipment with the second network device and storing the third-party user equipment in the second network device in advance, and without a need of installing a third-party application. When determining to join the current video call, the third-party user equipment may autonomously establish a media connection, without affecting another device in the current video call.

The foregoing describes in detail the methods in embodiments of this application. The following provides apparatuses in embodiments of this application.

FIG. 6 is a diagram of a structure of a communication apparatus 600 according to an embodiment of this application. The communication apparatus 600 may include a processing unit 601 and a transceiver unit 602. The units are specifically as follows.

The processing unit 601 is configured to process data. The transceiver unit 602 may implement a corresponding communication function. The transceiver unit 602 may also be referred to as a communication interface or a communication module.

Optionally, the communication apparatus 600 may further include a storage unit. The storage unit may be configured to store instructions and/or data. The processing unit 601 may read the instructions and/or the data in the storage module, to implement the foregoing method embodiments.

The communication apparatus 600 may be configured to perform an action performed by the first network device in the foregoing method embodiments. The communication apparatus 600 may be a network device or a component that can be configured in a network device. The processing unit 601 is configured to perform a processing-related operation on a first network device side in the foregoing method embodiments. The transceiver unit 602 is configured to perform a communication-related operation on the first network device side in the foregoing method embodiments.

Optionally, the transceiver unit 602 may include a sending unit and a receiving unit. The sending unit is configured to perform the sending operation in the foregoing method embodiments. The receiving unit is configured to perform the receiving operation in the foregoing method embodiments.

It should be noted that the communication apparatus 600 may include the sending unit, but does not include the receiving unit. Alternatively, the communication apparatus 600 may include the receiving unit, but does not include the sending unit. This may be specifically determined based on whether the foregoing solution performed by the communication apparatus 600 includes a sending action and a receiving action.

Optionally, the communication apparatus 600 is configured to perform an action performed by the first network device in the embodiment shown in FIG. 5. For details, refer to the related descriptions in the embodiment shown in FIG. 5. Details are not described herein again. For example, the communication apparatus 600 is configured to perform the following solution.

The receiving unit is configured to receive, in a process of a first video call, a first request message sent by an agent device, where the first video call is a video call that is between a first device and the agent device and that is established by the first network device and a second network device.

The sending unit is configured to send a link message to a second device based on the first request message, where the link message is used for requesting the second device to join the video call between the first device and the agent device.

In a possible implementation, the receiving unit is configured to receive a second request message sent by the second device.

The processing unit 601 is configured to establish a second video call based on the second request message, where the second video call is used for a video call among the first device, the agent device, and the second device.

In a possible implementation, the first device supports a video call function of mobile communication, the second device does not support the video call function of mobile communication, and the second network device is a network device for mobile communication.

In a possible implementation, the processing unit 601 is configured to determine, based on the second request message, whether the second device can join the video call between the first device and the agent device.

The sending unit is configured to send a first message to the second device when it is determined that the second device can join the video call between the first device and the agent device, where the first message includes first verification information and an identifier of the agent device.

In a possible implementation, the second request message is sent by the second device based on the link message, the second request message includes second verification information and the identifier of the agent device, the second verification information is generated by the first network device based on the first request message, and the second verification information is associated with the identifier of the agent device.

The processing unit 601 is configured to: verify, based on the second verification information in the second request message, whether an identity of the second device is valid, and determine, based on the identifier of the agent device in the second request message, whether the agent device meets a first preset condition; and when the identity of the second device is valid and the agent device meets the first preset condition, determine that the second device can join the video call between the first device and the agent device.

In a possible implementation, that the identity of the second device is valid includes: the second verification information is correct and within a first time period, where the first time period is a time period in which the second verification information is valid.

That the agent device meets the first preset condition includes: the agent device is in a call state, and a destination identifier associated with the agent device indicates that the second device is allowed to join the video call between the first device and the agent device, where the destination identifier is associated with the second verification information, and the destination identifier is included in the first request message.

In a possible implementation, the receiving unit is configured to receive a third request message sent by the second device, where the third request message is used for requesting to establish a media connection between the second device and the agent device, and the third request message includes the first verification information and the identifier of the agent device.

The processing unit 601 is configured to: determine, based on the third request message, whether a second preset condition is met currently; and establish the second video call when the second preset condition is met.

In a possible implementation, that the second preset condition is met includes: the first verification information is correct and within a second time period, and the agent device meets the first preset condition, where the second time period is a time period in which the first verification information is valid.

In a possible implementation, the processing unit 601 is configured to establish a conference of the second video call.

The sending unit is configured to send a fourth request message to the first device, send a fifth request message to the second device, and send a sixth request message to the agent device.

The receiving unit is configured to receive a first response message sent by the first device based on the fourth request message, receive a second response message sent by the second device based on the fifth request message, and receive a third response message sent by the agent device based on the sixth request message, where the first response message indicates that the first device joins the conference of the second video call, the second response message indicates that the second device joins the conference of the second video call, and the third response message indicates that the agent device joins the conference of the second video call.

In a possible implementation, the first request message is sent when the agent device obtains an identifier of the first device and the destination identifier associated with the agent device, and the destination identifier is set by the agent device based on a user operation.

It should be noted that, for implementations and beneficial effects of the modules, refer to corresponding descriptions in the method embodiment shown in FIG. 5.

Optionally, the communication apparatus 600 is configured to perform an action performed by the second device in the embodiment shown in FIG. 5. For details, refer to the related descriptions in the embodiment shown in FIG. 5. Details are not described herein again. For example, the communication apparatus 600 is configured to perform the following solution.

A receiving unit is configured to receive a link message sent by a first network device, where the link message is used for requesting a second device to join a video call between a first device and an agent device, the link message is sent by the first network device based on a first request message, the first request message is sent by the agent device to the first network device in a process of a first video call, and the first video call is a video call that is between the first device and the agent device and that is established by the first network device and a second network device.

In a possible implementation, a sending unit is configured to send a second request message to the first network device based on the link message, where the second request message is used by the first network device to establish a second video call, and the second video call is used for a video call among the first device, the agent device, and the second device.

In a possible implementation, the first device supports a video call function of mobile communication, the second device does not support the video call function of mobile communication, and the second network device is a network device for mobile communication.

In a possible implementation, a processing unit 601 is configured to display the link message on a first interface, where the first interface includes a first control.

The receiving unit is configured to receive a first operation performed on the first control on the first interface.

The sending unit is configured to send the second request message to the first network device in response to the first operation.

In a possible implementation, the receiving unit is configured to receive a first message sent by the first network device, where the first message includes first verification information and an identifier of the agent device, and the first verification information is sent when the first network device determines that the second device can join the video call between the first device and the agent device.

In a possible implementation, the sending unit is configured to send a third request message to the first network device based on the first message, where the third request message is used by the first network device to establish the second video call, and the third request message includes the first verification information and the identifier of the agent device.

In a possible implementation, the receiving unit is configured to receive a fourth request message sent by the first network device, where the fourth request message is sent when the first network device establishes a conference of the second video call.

The sending unit is configured to send a first response message to the first network device based on the fourth request message, where the first response message indicates that the second device joins the conference of the second video call.

It should be noted that, for implementations and beneficial effects of the modules, refer to corresponding descriptions in the method embodiment shown in FIG. 5.

It should be understood that a specific process in which the modules perform the foregoing corresponding processes has been described in detail in the foregoing method embodiments. For brevity, details are not described herein again.

The processing unit 601 in the foregoing embodiment may be implemented by at least one processor or a processor-related circuit. The transceiver unit 602 may be implemented by a transceiver or a transceiver-related circuit. The transceiver unit 602 may also be referred to as a communication module or a communication interface. The storage module may be implemented by at least one memory.

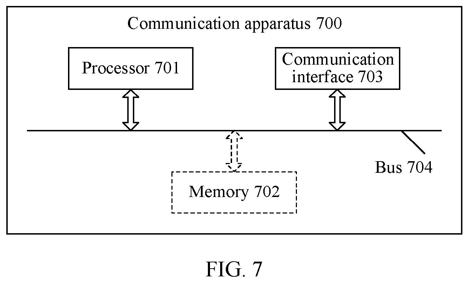

FIG. 7 is a diagram of a structure of a communication apparatus 700 according to an embodiment of this application. The communication apparatus 700 includes at least one processor 701 and a communication interface 703, and optionally, further includes a memory 702. The processor 701, the memory 702, and the communication interface 703 are connected to each other through a bus 704.

The memory 702 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 702 is configured to store a related computer program and data. The communication interface 703 is configured to receive and send data.

The processor 701 may be one or more central processing units (central processing units, CPUs). When the processor 701 is one CPU, the CPU may be a single-core CPU or a multicore CPU.

The processor 701 in the communication apparatus 700 is configured to read a computer program or instructions stored in the memory 702, to implement a function of the foregoing processing unit. The communication interface 703 in the communication apparatus 700 is configured to implement a function of the foregoing transceiver unit.

An embodiment of this application further provides a chip apparatus. The chip apparatus includes at least one processor. The at least one processor is configured to invoke a computer program or instructions stored in a memory, to enable the processor to perform the method provided in embodiments shown in FIG. 5.

In a possible implementation, input of the chip apparatus corresponds to a receiving operation in any one of embodiments shown in FIG. 5, and output of the chip apparatus corresponds to a sending operation in any one of embodiments shown in FIG. 5.

Optionally, the processor is coupled to the memory through an interface.

Optionally, the chip apparatus further includes the memory, and the memory stores computer program instructions.

An embodiment of this application further provides a computer-readable storage medium. The computer-readable storage medium stores a computer program or instructions. When the computer program or the instructions are run on a processor, the method performed by the first network device or the second device in the foregoing method embodiments is implemented.

An embodiment of this application further provides a computer program product. The computer program product includes a computer program or instructions. When the computer program or the instructions are run on a processor, the method performed by the first network device or the second device in the foregoing method embodiments is implemented.

An embodiment of this application further provides a communication system. The communication system includes the first network device in the foregoing embodiments and the second device in the foregoing embodiments. The first network device is configured to perform some or all operations performed by the first network device in the foregoing method embodiments, and the second device is configured to perform some or all operations performed by the second device in the foregoing method embodiments.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may exist in a base station or a terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer program or the instructions are loaded and executed on a computer, all or some of the procedures or functions in embodiments of this application are executed. The computer may be a general-purpose computer, a special-purpose computer, a computer network, a network device, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

## Claims

1. A call method, applied to a first network device, wherein the method comprises:
receiving, in a process of a first video call, a first request message sent by an agent device, wherein the first video call is a video call that is between a first device and the agent device and that is established by the first network device and a second network device; and
sending a link message to a second device based on the first request message, wherein the link message is used for requesting the second device to join the video call between the first device and the agent device.

2. The method according to claim 1, wherein after the sending the link message to the second device, the method further comprises:
receiving a second request message sent by the second device; and
establishing a second video call based on the second request message, wherein the second video call is used for a video call among the first device, the agent device, and the second device.

3. The method according to claim 1 or 2, wherein the first device supports a video call function of mobile communication, the second device does not support the video call function of mobile communication, and the second network device is a network device for mobile communication.

4. The method according to claim 2 or 3, wherein the method further comprises:
determining, based on the second request message, whether the second device can join the video call between the first device and the agent device; and
sending a first message to the second device when determining that the second device can join the video call between the first device and the agent device, wherein the first message comprises first verification information and an identifier of the agent device.

5. The method according to claim 4, wherein the second request message is sent by the second device based on the link message, the second request message comprises second verification information and the identifier of the agent device, the second verification information is generated by the first network device based on the first request message, and the second verification information is associated with the identifier of the agent device;
the determining, based on the second request message, whether the second device can join the video call between the first device and the agent device comprises:
verifying, based on the second verification information in the second request message, whether an identity of the second device is valid, and determining, based on the identifier of the agent device in the second request message, whether the agent device meets a first preset condition; and
the method further comprises:
when the identity of the second device is valid and the agent device meets the first preset condition, determining that the second device can join the video call between the first device and the agent device.

6. The method according to claim 5, wherein that the identity of the second device is valid comprises:
the second verification information is correct and within a first time period, wherein the first time period is a time period in which the second verification information is valid; and
that the agent device meets the first preset condition comprises:
the agent device is in a call state, and a destination identifier associated with the agent device indicates that the second device is allowed to join the video call between the first device and the agent device, wherein the destination identifier is associated with the second verification information, and the destination identifier is comprised in the first request message.

7. The method according to any one of claims 4 to 6, wherein after the sending the first message to the second device, the method further comprises:
receiving a third request message sent by the second device, wherein the third request message is used for requesting to establish a media connection between the second device and the agent device, and the third request message comprises the first verification information and the identifier of the agent device;
determining, based on the third request message, whether a second preset condition is met currently; and
establishing the second video call when the second preset condition is met.

8. The method according to claim 7, wherein that the second preset condition is met comprises:
the first verification information is correct and within a second time period, and the agent device meets the first preset condition, wherein the second time period is a time period in which the first verification information is valid.

9. The method according to any one of claims 2 to 8, wherein the establishing the second video call comprises:
establishing a conference of the second video call;
sending a fourth request message to the first device, sending a fifth request message to the second device, and sending a sixth request message to the agent device; and
receiving a first response message sent by the first device based on the fourth request message, receiving a second response message sent by the second device based on the fifth request message, and receiving a third response message sent by the agent device based on the sixth request message, wherein the first response message indicates that the first device joins the conference of the second video call, the second response message indicates that the second device joins the conference of the second video call, and the third response message indicates that the agent device joins the conference of the second video call.

10. The method according to any one of claims 1 to 9, wherein the first request message is sent when the agent device obtains an identifier of the first device and the destination identifier associated with the agent device, and the destination identifier is set by the agent device based on a user operation.

11. A call method, applied to a second device, wherein the method comprises:
receiving a link message sent by a first network device, wherein the link message is used for requesting the second device to join a video call between a first device and an agent device; and
sending a second request message to the first network device based on the link message, wherein the second request message is used by the first network device to establish a second video call, and the second video call is used for a video call among the first device, the agent device, and the second device.

12. The method according to claim 11, wherein the first device supports a video call function of mobile communication, the second device does not support the video call function of mobile communication, and the second network device is a network device for mobile communication.

13. The method according to claim 11 or 12, wherein the sending the second request message to the first network device based on the link message comprises:
displaying the link message on a first interface, wherein the first interface comprises a first control;
receiving a first operation performed on the first control on the first interface; and
sending the second request message to the first network device in response to the first operation.

14. The method according to any one of claims 11 to 13, wherein after the sending the second request message to the first network device based on the link message, the method further comprises:
receiving a first message sent by the first network device, wherein the first message comprises first verification information and an identifier of the agent device, and the first verification information is sent when the first network device determines that the second device can join the video call between the first device and the agent device.

15. The method according to claim 14, wherein after the receiving the first message sent by the first network device, the method further comprises:
sending a third request message to the first network device based on the first message, wherein the third request message is used by the first network device to establish the second video call, and the third request message comprises the first verification information and the identifier of the agent device.

16. The method according to claim 15, wherein after the sending the third request message to the first network device, the method further comprises:
receiving a fourth request message sent by the first network device, wherein the fourth request message is sent when the first network device establishes a conference of the second video call; and
sending a first response message to the first network device based on the fourth request message, wherein the first response message indicates that the second device joins the conference of the second video call.

17. A communication apparatus, wherein the apparatus comprises a receiving unit and a sending unit, the receiving unit is configured to receive, in a process of a first video call, a first request message sent by an agent device, wherein the first video call is a video call that is between a first device and the agent device and that is established by the communication apparatus and a second network device; and
the sending unit is configured to send a link message to a second device based on the first request message, wherein the link message is used for requesting the second device to join the video call between the first device and the agent device.

18. A communication apparatus, wherein the apparatus comprises a receiving unit and a sending unit, the receiving unit is configured to receive a link message sent by a first network device, and the link message is used for requesting a second device to join a video call between a first device and an agent device; and
the sending unit is configured to send a second request message to the first network device based on the link message, wherein the second request message is used by the first network device to establish a second video call, and the second video call is used for a video call among the first device, the agent device, and the second device.

19. A communication apparatus, wherein the apparatus comprises at least one processor and a communication interface, and the at least one processor invokes a computer program or instructions stored in a memory to perform the method according to any one of claims 1 to 10.

20. A communication apparatus, wherein the apparatus comprises at least one processor and a communication interface, and the at least one processor invokes a computer program or instructions stored in a memory to perform the method according to any one of claims 11 to 16.

21. A communication system, wherein the communication system comprises a first network device and a second device, wherein
the first network device is configured to: receive, in a process of a first video call, a first request message sent by an agent device, wherein the first video call is a video call that is between a first device and the agent device and that is established by the first network device and a second network device; and send a link message to a second device based on the first request message, wherein the link message is used for requesting the second device to join the video call between the first device and the agent device; and
the second device is configured to receive the link message.

22. The system according to claim 21, wherein the first network device is the apparatus according to claim 19, and the second device is the apparatus according to claim 20.

23. A computer-readable storage medium, wherein the computer-readable storage medium stores a computer program or instructions, and when the computer program or the instructions are run on a processor, the method according to any one of claims 1 to 16 is implemented.

24. A computer program product, wherein the computer program product comprises a computer program or instructions, and when the computer program or the instruction are run on a computer, the method according to any one of claims 1 to 16 is implemented.
